Europäisches Patentamt

European Patent Office

Office européen des brevets

(19)

(11) Veröffentlichungsnummer: **0 119 284**
**A2**

(12) **EUROPÄISCHE PATENTANMELDUNG**

(21) Anmeldenummer: 83102573.9

(22) Anmeldetag: 16.03.83

(51) Int. Cl.³: **F 02 B 77/11**, F 01 P 3/18, F 02 B 41/00

(43) Veröffentlichungstag der Anmeldung: 26.09.84
Patentblatt 84/39

(71) Anmelder: **Elsbett, Ludwig, Industriestrasse 14,
D-8543 Hilpoltstein (DE)**
Anmelder: **Elsbett, Günter, Industriestrasse 14,
D-8543 Hilpoltstein (DE)**

(72) Erfinder: **Elsbett, Ludwig, Industriestrasse 14,
D-8543 Hilpoltstein (DE)**
Erfinder: **Elsbett, Günter, Industriestrasse 14,
D-8543 Hilpoltstein (DE)**

(74) Vertreter: **Merten, Fritz, Hallerhüttenstrasse 6,
D-8500 Nürnberg 40 (DE)**

(84) Benannte Vertragsstaaten: **AT BE CH FR GB IT LI NL SE**

(54) Triebwerk, bestehend aus Hubkolben-Brennkraftmaschine, Kraftübersetzung und Wärmetauscher.

(57) Triebwerk, bestehend aus Hubkolben-Brennkraftmaschine, Kraftübersetzung (Getriebe) und Wärmetauscher, insbesondere für Kraftfahrzeuge hoher Leistung und Wirtschaftlichkeit, wobei die Brennkraftmaschine nach einem große Wärmedichtheit aufweisenden Brennverfahren betreibbar, und daß zum Zwecke eines Kurzbaues dieser Brennkraftmaschine deren Zylinderanzahl und Kühlbedarf reduziert und die spezifische Zylinderleistung des Triebwerkes so gesteigert wird, daß die Baulänge der Brennkraftmaschine einen Quereinbau derselben im Bereich der Front des Kraftfahrzeuges zuläßt und der Wärmetauscher aus der Front und/oder dem Motorraum des Kraftfahrzeuges entfernt ist.

EP 0 119 284 A2

ACTORUM AG

0119284

Anmelder: Ludwig  E l s b e t t
Günter  E l s b e t t
Industriestraße 14
D-8543 Hilpoltstein


Vertreter und Zustellungsbevollmächtigter: Fritz  M e r t e n
Patent- und Zivilingenieur
Brückkanalstraße 25
D-8501 Schwarzenbruck

_____

Aktenzeichen:
Unser Zeichen: 10.3138
Datum: 22. März 1982

_____

Titel: Triebwerk, bestehend aus Hubkolben-
Brennkraftmaschine, Kraftübersetzung
und Wärmetauscher

Die Erfindung bezieht sich auf ein Triebwerk, bestehend
aus Hubkolben-Brennkraftmaschine, Kraftübersetzung (Getriebe)
und Wärmetauscher, insbesondere für Kraftfahrzeuge hoher
Leistung und Wirtschaftlichkeit.

Triebwerke von Kraftfahrzeugen für das Aufbringen und Übertragen kinetischer Energien werden im wesentlichen von einer
Hubkolben-Brennkraftmaschine, einer Kraftübersetzung, vorzugsweise in Form eines mechanischen oder hydraulischen Getriebes und einem Wärmetauscher, der für die Temperierung, insbesondere der Brennkraftmaschine und/oder des Fahrgastraumes
sorgt, gebildet. Dabei kann die Brennkraftmaschine als ein

- 2 -

Diesel- oder Ottomotor ausgeführt und entsprechend einer
von dieser abverlangten, spezifischen Leistung groß- oder
kleinvolumig mit vielen oder nur wenigen Zylindern konzipiert sein. Die einer solchen Brennkraftmaschine nachgeschaltete Kraftübersetzung, d. h. primär das Getriebe, ist
zum einen am Abtrieb der Brennkraftmaschine angeflanscht
und zum andern mit mindestens einer Achse des Kraftfahrzeuges verbunden, über die die Antriebsleistung des Triebwerkes auf eine Fahrbahn übertragen wird. Der Wärmetauscher
schließlich, der der Temperierung, mindestens der Brennkraftmaschine, dient, kann als Wasser- oder Ölkühler ausgeführt sein, durch den ein Kühlmedium geführt wird, das dem
Abtransport der aus der Brenngaswärme entstandenen Aufheizung des Triebwerkes dient. In Fällen, in denen das Triebwerk in ein Fahrzeug installiert wird, ist für dieses eine
entsprechende Aufhängung am Fahrzeug vorgesehen, und es
ist diese dort so angeordnet, daß der Wärmetauscher die
Front des Fahrzeuges und die Brennkraftmaschine nebst Kraftübersetzung die dahinter sich befindenden Einbauräume ausfüllen.

Bei Kraftfahrzeugen mit kleineren Leistungen, wie etwa Personenkraftwagen (PKW), werden in zunehmendem Maße Triebwerke
vorgesehen, die sich quer zur Fahrtrichtung des Fahrzeuges
in dieses einbauen lassen, um auf diese Weise zum einen
eine bessere Richtungsstabilität und zum anderen eine knickfreie Kraftübertragung auf die quer zur Fahrtrichtung vorgesehene Radachse zu schaffen. Der Wärmetauscher hingegen
bleibt, auch bei einem solchen Einbau der Brennkraftmaschine,
an der Front des Fahrzeuges und stellt dadurch einen erheblichen Luftwiderstand dar, der neben Leistungsverlusten
auch die stilistische Gestaltung des Buges des Kraftfahrzeuges vielfach nachteilig beeinflußt.

Während in der Wahl des Wärmetauschers und der Kraftübertragung die Variationsmöglichkeiten für diese gering sind,
sind diese in der Wahl der Brennkraftmaschine vielschichtiger, da letztere sich nicht nur in baulicher Ausführung, nämlich als Diesel- oder Ottomotor, sondern auch in der Art der Kraftstoffeinbringung und somit des Brennverfahrens unterscheiden.

Hubkolben-Brennkraftmaschinen, wie Dieselmotoren, Ottomotoren u.a., weisen bekanntlich einen Gehäuseblock auf, welcher in seinem Inneren mindestens einen Zylinder mit darin axial verschieblichem Kolbentrieb und einen mit diesem Kolbentrieb verbundenen Kurbeltrieb einschließt. Dabei ist dieser Gehäuseblock nach seinem einen Ende von einem den Zylinder abdeckenden Zylinderkopf und nach seinem anderen Ende durch eine Ölwanne verschlossen, in letztere der Kurbeltrieb, mindestens teilweise, eintaucht. Der Gehäuseblock, der je nach dessen Einsatzes, der Anzahl seiner Zylinder und/oder der Art des Verbrennungsverfahrens der Brennkraftmaschine ausgelegt wird, kann dabei aus Aluminium, Grau- oder Stahlguß oder mindestens teilweise auch aus Keramik hergestellt sein, und er kann auch Einrichtungen für eine Kühl- und/oder Schmiermittelversorgung aufweisen. Die Trennebenen zwischen Zylinderkopf und Gehäuseblock einerseits und zwischen diesem und der Ölwanne andererseits sind in der Regel aufwendig vorbehandelt, und es sind in diesen Ebenen Dichtmittel eingelegt, die zum einen überwiegend der Gasabdichtung und zum anderen der Schmiermittelabdichtung dienen. Zusätzlich zu diesen Maßnahmen am Gehäuseblock ist dieser mit Lagerstellen für das Auflagern des Kurbeltriebes, wie auch mit Verankerungen für das Aufspannen des Zylinderkopfes und der Ölwanne versehen. Trotz der oft sehr aufwendigen Gestaltung des Gehäuseblockes ist dieser vielfach kaum formstabil, wodurch Verformungen am Gehäuseblock auftreten, die zu Klemmungen der darin bewegten Teile führen und vielfach auch zum Verlust der Brennkraftmaschine selbst Anlaß geben können.

Um solche Mängel abzubauen, ist bei einem Gehäuseblock vorgeschlagen worden, im Bereich einer Gürtelzone des jeweiligen, vom Gehäuseblock eingeschlossenen Zylinders eine ringförmige Bundplatte vorzusehen, die zum einen am Außenmantel
des jeweiligen Zylinders und zum andern am Innenmantel des
Gehäuseblockes unlösbar verbunden ist. Diese Bundplatte,
die eine Versteifung des Gehäuseblockes bildet, ist dabei
derart ausgeführt und zwischen Zylinder und Gehäuseblock
vorgesehen, daß sie ein elastisches Wachsen des jeweiligen
Zylinders koaxial zur Längsmittelachse desselben gestattet,
und darüberhinaus die aus dem Verbrennungsvorgang resultierenden und primär auf den Zylinderkopf und Kolben wirkenden
Kräfte überwiegend unterhalb der Gleitfläche des Kolbens
am Zylinder, d. h. im Bereich des unteren Totpunktes des
Kolbens, in den Gehäuseblock einleitet. Durch diese, sicherlich außerhalb bisheriger Lehrmeinungen, vorgenommene Einleitung der Kräfte in den Gehäuseblock, wird die Wand des
Zylinders innerhalb elastischer Grenzen des Zylinder- bzw.
Gehäuseblockmateriales am Ausdehnen koaxial zur Längsmittelachse kaum behindert, so daß das dem Zylinderkopf zugewandte
Ende des Zylinders satt am Zylinderkopf anliegen kann. Dieses satte Anliegen hat wiederum zur Folge, daß selbst bei
extremen Belastungen der Brennkraftmaschine deren Gehäuseblock und somit auch deren Zylinder dicht am jeweiligen
Zylinderkopf anliegend bleibt, wodurch insbesondere Gasverluste weitgehend unterbunden werden. Dieses satte Anliegen
des Zylinders und damit auch des Gehäuseblockes am Zylinderkopf
erspart, zumindest in den meisten Fällen auch das Einlegen
einer Dichtung zwischen Zylinderkopf und Gehäuseblock und
damit auch etwaige Probleme, die sich bekanntlich bei Undichtwerden der Dichtung einstellen. Wenn auch mit einem
solchen Gehäuseblock ein Großteil der Gaskräfte ohne Verwindung des Gehäuseblockes in dieses eingeleitet werden können, so bedarf eine optimale Abdichtung, insbesondere des
Zylinderkopfes am Gehäuseblock, auch einer differenzierten Auslegung des Kolben- und Kurbeltriebes, um ein aus der Brennkraftmaschine, Kraftübersetzung und Wärmetauscher bestehendes Triebwerk für eine Reihe besonderer Aufgaben anwendbar zu machen. So wird beispielsweise vielfach gewünscht, das Triebwerk kürzer zu gestalten, um dessen Einbaumöglichkeiten in ein Fahrzeug vielschichtiger zu gestalten und andererseits dieses Triebwerk so auszubilden, daß es noch eine ausreichende Leistung aufbringt, um das Fahrzeug entsprechend bewegen zu können (vgl. deutsche Patentanmeldung P 31 07 461.8).

Demgemäß liegt der Erfindung die Aufgabe zugrunde, ein Triebwerk, insbesondere für dessen Anwendung in Kraftfahrzeugen, dahingehend weiterzubilden, daß dieses für Antriebe großer Leistung und dennoch großer Wirtschaftlichkeit konzipiert werden kann und dabei solche Ausmaße aufweist, daß mindestens dessen Hubkolben-Brennkraftmaschine und Kraftübersetzung parallel zu einer Treibachse bzw. quer zur Fahrtrichtung angeordnet werden können, um auf diese Weise Einbauraum bei Vorsehen des Triebwerkes in ein PKW-oder LKW-Fahrzeug einzusparen.

Gemäß der Erfindung wird diese Aufgabe mit einem Triebwerk der eingangs genannten Art dadurch gelöst, daß die Brennkraftmaschine nach einem, große Wärmedichtheit aufweisenden Brennverfahren betreibbar, und daß zum Zwecke eines Kurzbaues dieser Brennkraftmaschine deren Zylinderzahl und Kühlbedarf reduziert und die spezifische Zylinderleistung des Triebwerkes so gesteigert wird, daß die Baulänge der Brennkraftmaschine selbst einen Quereinbau derselben im Bereich der Front des Kraftfahrzeuges und somit quer zur Fahrtrichtung zuläßt und der Wärmetauscher aus der Front und/oder dem Motorenraum des Kraftfahrzeuges entfernbar ist.

Weitere vorteilhafte Weiterbildungen der Erfindung können insbesondere den verbleibenden Unteransprüchen entnommen werden.

0119284

Durch diese in den vorgenannten Ansprüchen gekennzeichneten
Maßnahmen wird nicht nur die der Erfindung zugrunde liegende
Aufgabe vorteilhaft gelöst, sondern es wird der Vorteil
geschaffen, daß durch das Anheben der spezifischen Zylinder-
bzw. Literleistung der Brennkraftmaschine und somit des
Triebwerkes dieses als sogenannter Kurzmotor ausgeführt
werden kann, der trotz Reduzierung dessen Hubvolumens durch
Herabsetzen der Zylinderanzahl dennoch die Leistung eines
großvolumigen, mehrzylindrigen Triebwerkes aufweist. Dieser
erfindungsgemäße Effekt hat zur Folge, daß das Triebwerk
und hier insbesondere dessen Brennkraftmaschine und Kraftübersetzung quer zur Fahrtrichtung des Fahrzeuges eingebaut
werden können, wodurch neben erheblichen Vorteilen in der
Unterbringung von Brennkraftmaschine und Kraftübersetzung,
bzw. Getriebe, eine einfachere Kraftübersetzung auf die
Radachsen ermöglicht wird.

Durch diese Maßnahmen ergibt sich auch die Möglichkeit,
mehrere Antriebsachsen zu schaffen, zumindest aber der Vorteil für die Richtungsstabilität, wenn das quer eingebaute
Triebwerk mit seiner Masse im Bereich der Front bzw. an
der Front des Fahrzeuges sitzt und darüber hinaus eine generell bessere Wirtschaftlichkeit bezüglich Luft- und Rollwiderstand sowie Raumaufteilung und Gewicht des Fahrzeuges.
Bei Lastkraftwagen-(LKW)-Aufliegerbetrieb, d. h. solchen
mit Auflage deren Aufbaues hinter dem Fahrerhaus, ist der
Abstand der Motormasse vor dem Auflagepunkt des Aufbaues
des Fahrzeuges besonders wichtig, wenn dieses, insbesondere
beim Anfahren im beladenen Zustand, nicht den Radkontakt,
insbesondere den der gelenkten Achse, zur Fahrbahn verlieren
soll. Diese vorteilhafte Lösung, hinsichtlich des Kurzbaues
des Triebwerkes, konnte bisher nur für Fahrzeuge mit kleinerer bis mittlerer Leistung wahrgenommen werden. PKW der
oberen Mittelklasse und erst recht leistungsstarke Triebwerke für LKW hatten bisher zu große Motoren, als daß sie
vor dem Fahrersitz oder unter dem Fahrerhaus quer eingebaut
werden konnten. Besonders bei Triebwerken, die als Diesel-

0119284

motoren konzipiert waren, benötigte man mangels ausreichender Leistung einzelner Zylinder viel zu viele Zylinder. Außerdem bedurften solche Dieselmotoren einer großen Kühlleistung und eines vom Motor selbst angetriebenen Kühlerventilators. Auch dafür ist bei quer eingebauten Brennkraftmaschinen so wenig Platz, wie auch für den umfangreichen und als Wasserkühler ausgeführten Wärmetauscher die Front des Fahrzeuges beschränkte Einbaumöglichkeiten bietet. Für eine bessere Konzeption des Fahrzeuges ist es aber nötig, die Leistung pro Zylinder wesentlich zu steigern und die Kühlung der Brennkraftmaschine zu vermindern. Die Lösung dieser Aufgabe mit den Maßnahmen gemäß der Erfindung ermöglicht praktisch die Verdoppelung der Literleistung im Bau von Brennkraftmaschinen und hier insbesondere Dieselmotoren, so daß z. B. nur drei, statt bisher sechs Zylinder für die gleiche Leistung erforderlich werden. Ebenso muß der bisherige Aufwand für die Motorkühlung so verringert werden, daß der Kühlventilator nicht mehr vom Motor angetrieben zu werden braucht. Hinzu kommt, daß die Aufladung der Brennkraftmaschine so gesteigert werden kann, daß die Drehzahl derselben niedrig gehalten und dennoch die spezifische Literleistung der Brennkraftmaschine angehoben werden kann. Die Lösung wurde erfindungsgemäß einerseits in der Reduzierung der Aufheizung der Teile des Triebwerkes gefunden, und zwar ebenso bezüglich des Wärmeüberganges vom Arbeitsgas an die Brennraumwände, wie auch andererseits durch die Reduzierung der Brennraumflächen selbst und schließlich durch das Vorsehen von schlecht wärmeleitenden Materialien nebst an diesen vorgesehenen Wärmedrosseln u.a.. Der Wegfall an Kühlverlusten brachte besonders der Abgasturbine soviel Energiezuwachs, daß das Ziel, drei statt wie bisher sechs Zylinder bei gleicher Drehzahl, erreicht werden konnte. Außerdem konnte die Kühlung von Wasser auf Öl umgestellt werden, was zu einer wesentlichen Vereinfachung des Kühlsystems führte.

Auch der Antrieb des Kühlerlüfters direkt vom Motor, wie
das bisher der Fall war, ist nicht mehr erforderlich, da
dieser durch die Reduzierung des Kühlbedarfes bereits elektrisch angetrieben werden kann. Es wurde ferner festgestellt,
daß es bereits genügt, kleinere Elektrolüfter geringer Leistung, z. B. etwa 300 Watt für einen 300 KW-Antrieb, zu installieren, die zudem von der Lichtmaschine gespeist werden
können. Dadurch kann der Kühler auch außerhalb des Motorraumes und auch weit entfernt von der Front des Fahrzeuges
untergebracht werden und stört demnach weder den Einbau
des Triebwerkes quer zur Fahrtrichtung des Fahrzeuges noch
die aerodynamische Gestaltung der Front dieses Fahrzeuges.
Hinzu kommt, daß durch die Reduzierung der Lüfterleistung
der Brennkraftmaschine eine kaum noch ins Gewicht fallende
Leistung abverlangt wird, was insbesondere beim Einfahren
eines Fahrzeuges in eine Steigung sich sehr vorteilhaft
auf die Antriebsleistung der Brennkraftmaschine an der Triebachse auswirkt.

Eine weitere Verbesserung ergab sich ferner dadurch, daß
der reduzierte Wärmeübergang in der Brennkraftmaschine den
Übergang auf Ölkühlung ermöglichte, die wegen ihres höheren
Temperaturniveaus gegenüber Wasserkühlung den Kühlaufwand
weiter verringert. Um auch die Brennkraftmaschine von bisher
sechs auf nunmehr drei Zylinder bei gleicher Leistung und
Zylinderabstand reduzieren zu können, wurde erfindungsgemäß
auch die Zylinderfüllung verdoppelt. Dabei ist vor allem
eine Steigerung der Abgasenergie erforderlich, die erfindungsgemäß aus der Reduzierung der Kühlverluste gewonnen wurde.
Dazu war es auch erforderlich, das an sich bekannte Brennverfahren mit zentralem Brennkern, insbesondere im Brennraum eines Kolbens, um die Längsmittelachse des Kolbens bzw.
Brennraumes rotieren zu lassen und mit radialem Abstand
zu diesem Brennkern einen Luftmantel um die gleiche Längsmittelachse des Brennraumes rotieren zu lassen. Dabei wurde
vorgesehen, den Luftmantel selbst bei voller Leistung der Brennkraftmaschine, zwischen der Brennzone bzw. dem Brennkern und der Brennraumwand über die Brennphase hinaus als einen ausreichend isolierenden Frischluftmantel im Bereich dieser Wand zu haben. Dieser Luft- bzw. Kühlmantel ist Teil der Arbeitsluft, die nicht nur die Berührung von Brennzone und Brennraumwand verhindert, sondern auch aus der Wand noch Wärme abzieht, die zur Steigerung der Abgasenergie dient. Diese Abgasenergie konnte auch erfindungsgemäß durch das Zusammenwirken aller vorgenannten Faktoren noch so weit gesteigert werden, daß der Ladedruck den Abgasgegendruck schon im Auspuffhub übersteigt. Das machte es möglich, daß schon im Auspufftakt das Einlaßventil geöffnet werden kann, wodurch weitere Spülluft zur Wärmeabfuhr aus dem Zylinder und Zylinderkopf der Abgasturbine zugeführt wird.

Diese Steigerung der Abgasenergie macht den Mitteldruck unabhängig von der Drehzahl, so daß die Zylinderfüllung und damit der Mitteldruck auf den doppelten Wert gesteigert werden können, ohne daß die Brennkraftmaschine thermisch überfordert werden müßte. Zur Bewältigung der mechanischen Kräfte werden anstelle der üblichen Aluminium-Kolben, die aus Eisenlegierung bestehenden Eisen-Gelenk-Kolben eingesetzt, und es werden im Zylinderkopf alle Kühlkerne, die eine Schwächung des Zylinderdeckels bzw. Zylinderkopfes bedeuten, entfernt.

Die Spannmittel für den Zylinderkopf bzw. die den Zylinderkopf mit dem Gehäuseblock verbindenden Schrauben sind unterhalb des unteren Umkehrpunktes des Kolbens im Gehäuse befestigt und verbinden dadurch das Gehäuse und den Zylinderkopf völlig verzugsfrei, so daß auch schon wegen des Wegfalles der Wasserkühlung eine Zylinderkopfdichtung nicht mehr erforderlich wird. Dies ist für einen Dieselmotor mit hohem Mitteldruck besonders wichtig, weil hier Gasdrücke bis zu 200 bar auftreten, gegen die eine Zylinderkopfdichtung, wie sie heute fast bei allen Brennkraftmaschinen angewendet wird, nicht mehr standzuhalten vermag.

Bei nur drei Zylindern mit hohem Mittel- und Spitzendruck muß das Verhältnis, d.h. das Schwungmoment, berechenbar aus Schwunggewicht x Abstand vom Drehpunkt, das ist das $GD^2$ der Schwungmasse, erhöht werden. Andererseits ist ein Drehschwingungsdämpfer nicht mehr erforderlich, weil die Kurbelwelle bei dem erfindungsgemäßen Kurzmotor sehr kurz ausgeführt werden kann. Deshalb können an beiden Enden der Kurbelwelle Schwungräder angeordnet sein, wobei das eine Schwungrad, d. h. die hintere Schwungmasse, als Kupplungsträger, und die vordere Schwungmasse als Retarder ausgebildet sein können. Ein Retarder ist besonders bei schweren LKW-Fahrzeugen erforderlich, besonders dann, wenn der Bremswert des Motors infolge der nur drei vorhandenen Zylinder zu klein ausfällt. Diese kleine Eigenreibung der Brennkraftmaschine ist zwar ein Vorteil für den Kraftstoffverbrauch, sie ist aber ein Nachteil für den Verschleiß der Reibbremse, deren Teilenemission (Asbest-/Metallbestandteile) vermieden werden soll. Diese Eigenreibung ist auch ein Nachteil für die Bremswirkung, die in manchen Fällen, wie insbesondere Talfahrten, nicht ganz ausreichen kann und zusätzlicher Maßnahmen zu deren Erhöhung bedarf. Die Retarderwirkung als Unterstützung der Bremswirkung kann auch durch elektrische Elemente, die z. B. am zweiten Schwungrad angebracht sein können, erzeugt werden. Die zusätzliche Schwungmasse kann so auch als Anlasser oder Stromerzeuger gebraucht werden, und es ist vorzugsweise diese Masse kuppelbar ausgeführt, so daß sie z. B. auch als Schwungkraftanlasser dienen kann. Auch der Massenmomentenausgleich für die drei Kröpfungen der Kurbelwelle kann gegebenenfalls in ein oder beide Schwungräder eingebaut werden.

In den Zeichnungen ist eine der möglichen Ausführungen eines erfindungsgemäßen Triebwerkes und dessen Einbau in einem LKW oder PKW schematisch dargestellt. Es zeigt:

Fig. 1    einen Längsmittelschnitt durch eine Brennkraftmaschine mit einem Zylinderkopf, der teilweise
          in Ansicht und teilweise im Schnitt dargestellt
          ist und drei Kolbentriebe, von denen nur einer
          geschnitten ist,

Fig. 2    einen Querschnitt durch die Brennkraftmaschine
          in der Ebene II-II in Fig. 1,

Fig. 3    einen Querschnitt durch die Brennkraftmaschine
          in der Ebene III-III in Fig. 1,

Fig. 4    eine Seitenansicht auf ein LKW-Fahrzeug mit dem
          Triebwerk im Bereich der Fahrzeugfront,

Fig. 5    eine Draufsicht auf das Fahrzeug gem. Fig. 4,
          wobei nur die Brennkraftmaschine und die Kraftübersetzung quer zur Fahrtrichtung des Fahrzeuges an der Front desselben vorgesehen sind,

Fig. 6    eine Seitenansicht auf ein PKW-Fahrzeug mit dem
          Triebwerk, d. h. der Brennkraftmaschine und
          Kraftübersetzung im Bereich der Front des Fahrzeuges und dem Wärmetauscher nahe der Fahrgastkabine,

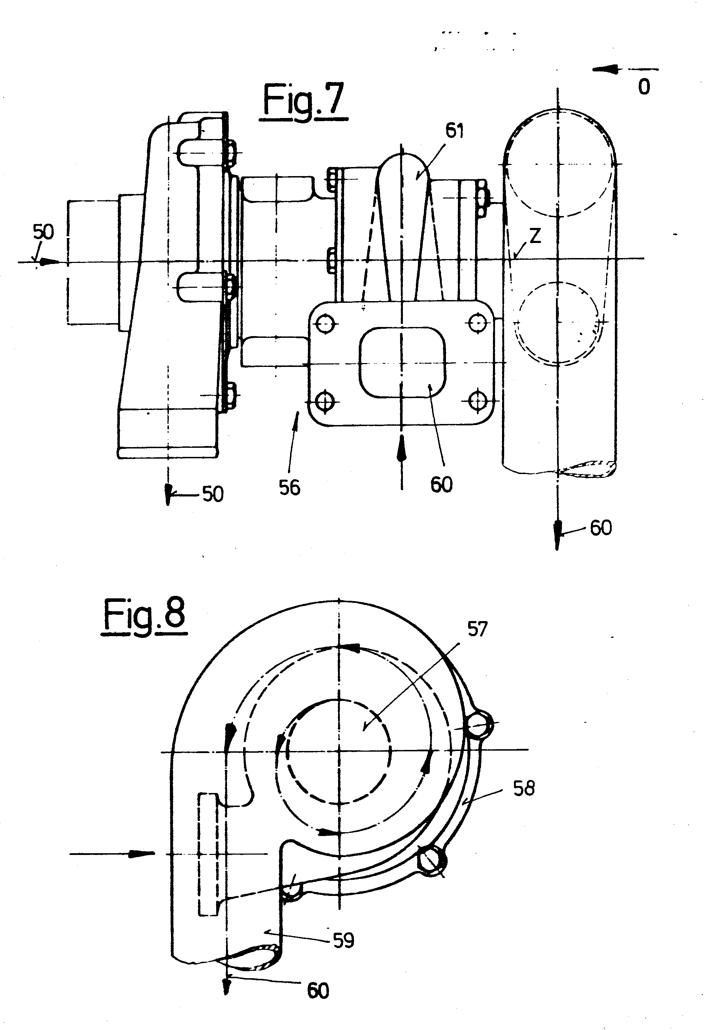

Fig. 7    eine Längsansicht auf eine Aufladergruppe,

Fig. 8    eine Queransicht auf die Aufladergruppe in Pfeil-
          richtung O und

Fig. 9    einen Längsmittelschnitt durch den dichtenden
          Abschnitt eines Kolbens mit darin vorgesehenem
          Brennraum und Einspritzung des Kraftstoffes parallel zur Längsmittelachse des Brennraumes.

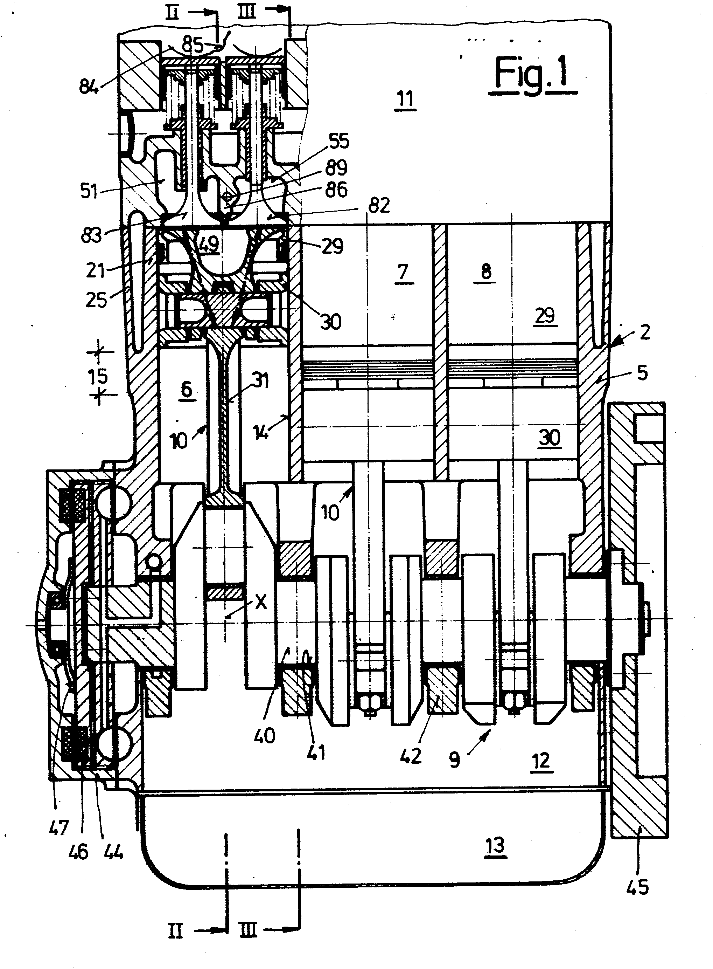

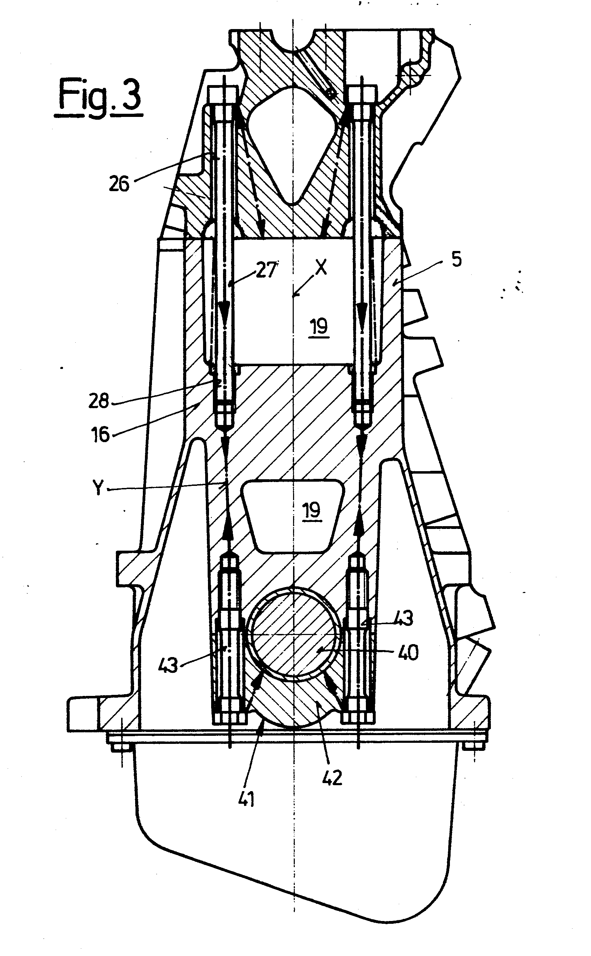

Das Triebwerk 1 gemäß der Erfindung wird im wesentlichen
von einer Hubkolben-Brennkraftmaschine 2, einer Kraftübersetzung 3, z. B. inform eines mechanischen oder hydraulischen Getriebes, und einem Wärmetauscher 4 gebildet, von
denen mindestens die Einheiten, Brennkraftmaschine und Kraftübersetzung, zusammengefaßt sein können. Die Brennkraftmaschine 2 selbst wird dabei im wesentlichen von einem Gehäuseblock 5 mit drei darin vorgesehenen Zylindern 6,7,8, einem
Kurbeltrieb 9 nebst Kolbentrieb 10 und einem den Zylinder
abdeckenden Zylinderkopf 11 wie auch einer den Kurbelraum
12 des Gehäuseblockes abschlßenden Ölwanne 13 gebildet.
Die im Gehäuseblock 5 vorgesehenen Zylinder 6 bis 8 für
den betreffenden Kolbentrieb 10, sind so angeordnet, daß
deren jeweilige, konzentrisch zur Längsmittelachse X des
Kolbentriebs vorgesehene Zylinderwand 14 ab einer bestimmten
Gürtelebene 15 zu beiden Seiten derselben auskragend und
somit ohne jegliche Abstützung zum Zylinderkopf 11 und Kurbelraum 12 hin verläuft. Die Gürtelebene 15 der Zylinderwand 14, die etwa in der Mitte der beidseitigen Längsausdehnung dieser Zylinderwand sich befindet, wird vorzugsweise
von einer Bundplatte 16 gebildet, welche zwischen dem Außenmantel 17 der Zylinderwand 14 und dem Innenmantel 18 des
Gehäuseblockes 5 vorgesehen und mit diesen unlösbar verbunden ist. Die Bundplatte 16 kann, je nach Anzahl der im Gehäuseblock 5 vorzusehenden Zylinder 6 bis 8 einerseits und
der jeweiligen Abstützung eines solchen Zylinders, gegen
den Gehäuseblock andererseits entweder ringförmig und somit
gürtelförmig um den jeweiligen Zylinder verlaufen, oder
sie kann nur teilweise den jeweiligen Zylinder umgreifen,
so daß bei Anordnung mehrerer, nebeneinander angeordneter
Zylinder diese zwischen sich eine offene, von der Bundplatte
nicht verschlossene Ausnehmung 19 aufweisen können. Die
Bundplatte 16 selbst, die ungeachtet der Materialwahl des
Gehäuseblockes 5, z. B. aus Aluminium oder Grauguß, festes
Bestandteil dieses Gehäuses ist, ist in einem Guß mit dem Mantel der Zylinderwand 14 einerseits und dem Außen- und
Innenmantel 17, 18 des Gehäuseblockes 5 andererseits verbunden. Die zu beiden Seiten von der Bundplatte 16 aus in axialer Richtung verlängerten Wandabschnitte 20, 21 der Zylinder
6 bis 8 einerseits und die Wandabschnitte 22, 23 des Gehäuseblockes 5 andererseits, sind so weit zu beiden Seiten
verlängert, daß sie zwischen sich jeweils eine ringförmige
Kammer 24, 25 bilden, von denen mindestens die dem Zylinderkopf 11 zugewandte Kammer 25 von einem Kühlmittel durchflossen sein kann. Die auskragenden, zum Zylinderkopf 11 weisenden Wandabschnitte 21 und 23 von Zylinder 6 bis 8 und Gehäuseblock 5 sind an ihren freien Enden, insbesondere plan, geschliffen, und es ist auf diesen Enden der Zylinderkopf 11,
vorzugsweise ohne Zwischenschaltung einer Dichtung, aufgelegt. Zur Befestigung dieses Zylinderkopfes 11 mit dem Gehäuseblock 5 sind durch den Zylinderkopf Bohrungen 26 für
Spannmittel 27, vorzugsweise sogenannte Dehnschrauben, vorgesehen, welche bis zur Bundplatte 16 verlängert sind und
in dieser ihre formschlüssige Verankerung haben. Zu diesem
Zweck ist die Bundplatte 16 für die Spannmittel 27, d.h.
die sogenannten Zuganker, mit Gewinde 28 versehen, und es
sind pro Zylinder 6 bis 8 vorzugsweise vier solcher Spannmittel 27 für das Festzurren des Zylinderkopfes 11 am Gehäuseblock 5 verankerbar. Bei Anordnung mehrerer Zylinder
6 bis 8 nebeneinander und Vorsehen eines gemeinsamen Zylinderkopfes 11 für mehrere, nebeneinander angeordnete Zylinder, ist es denkbar, weniger Spannmittel 27 vorzusehen und
die zwischen den Zylindern vorzusehenden, dort so anzubringen, daß zwei Spannmittel für zwei benachbarte Zylinder
die Verzurrung des Zylinderkopfes übernehmen. Die Bohrungen
26 für die Spannmittel 27, die vom Zylinderkopf 11 zur Bundplatte 16 geführt sind, sind vorzugsweise so nahe um die
jeweilige Zylinderwand 14 des Zylinders 6 bis 8 angeordnet,
daß im Längsmittelschnitt (Ebene III-III in Fig. 1) eines
solchen Zylinders gesehen, diese im Bereich der Zylinderwand, d. h. der Innenwand des Zylinders (vgl. Fig. 3), axial
verlaufen. Der Kolbentrieb 10, der von einem Eisen-Gelenk-
Kolben, bestehend aus einem dichtenden Abschnitt 29 und
einem führenden Abschnitt 30, und einem Pleuel 31 gebildet
wird, weist ein stegförmiges Pleuel auf, welches zumindest
im Bereich dessen Randzone je zwei entgegengesetzt gerichtete Stege 32 besitzt. Der Stegabstand zur Längsmittelachse
X des Kolbentriebes 10 ist symmetrisch ausgeführt und so
gewählt, daß dieser größer als der Durchmesser des Gelenkbolzens 33, welcher die Kolbenteile 29, 30 mit dem Pleuel
31 verbindet, ist. Im Bereich des Kurbeltriebes 9 ist das
Pleuel 31, wie allgemein üblich, mit einem Lager 33 für
den Kurbelwellenzapfen 34 der Kurbelwelle 35 versehen, wobei abweichend von bekannten Pleuelausführungen das Pleuel
in axialer Richtung zur Längsmittelachse X zwei annähernd
parallel verlaufende Querstege 36, 37 aufweist. Hierbei
ist der eine Quersteg 36 dem Abstand der Längsstege 32 des
Pleuels 31 angepaßt, und es ist der andere Quersteg 37 als
Teil einer Lagerschale des Lagers 33 ausgeführt, deren zu
einem Lagerdeckel 38 verlängerten Schenkel den Kurbelwellenzapfen 34 U-förmig umgreifen. Der Lagerdeckel 38 jedes Kurbelwellenzapfens 34 ist mittels Schrauben 39 an den Schenkeln angeschlossen. Die Kurbelwelle 40 des Kurbeltriebes
9 ist wiederum in Lagerstellen 41 des Gehäuseblockes 5 gelagert, und es sind die Deckel 42 dieser Lagerstellen mittels Schrauben 43 im Gehäuseblock verankert. Diese Schrauben 43 sind im Gehäuseblock 5 so verankert, daß sie (vgl.
Fig. 3) in Achsrichtung Y der Spannmittel 27 bzw. Schrauben
des Zylinderkopfes 11 verlaufen. Durch diesen Verlauf der
Spannmittel 27 bzw. Schrauben 43 werden die Kräfte aus den
Gasdrücken knickfrei in diese Spannmittel bzw. Zuganker
bzw. Schrauben geleitet und von diesen in die Bundplatte
16 geführt, wo sie gegenseitig ausgeglichen werden. Die
den Zylinderkopf 11 haltenden Spannmittel 27, sind vorzugsweise als Dehnschrauben ausgeführt und können einen so hoch bemessenen Schraubenzug haben, daß sie eine etwaige unterschiedliche Ausdehnung der Wandabschnitte 21, 23, die elastisch verformbar sind, ausgleichen können. Dadurch können die Zylinderwände 14 den Kontakt zum Zylinderkopf 11 nicht verlieren. Auf diese Weise wird auch ein etwaiges Abheben des Zylinderkopfes 11 von diesen Wandabschnitten 21, 23 des Zylinders 6 bis 8 bzw. Gehäuseblockes 5 verhindert, so daß auf eine sonst dazwischen liegende Gasabdichtung verzichtet werden kann. Selbst, wenn durch ein eventuelles, geringes Abheben des Zylinderkopfes 11 Brenngas in die Ringkammer 25 eintreten sollte, kann dieses über eine auch das Kühlmittel entlüftende Entlüfung ebenfalls entlüftet werden, so daß keine Nachteile für die Brennkraftmaschine 2 und deren Abdichtung sich einstellen können.

Die Kurbelwelle 40, die für drei Zylinder 6 bis 8 und somit auch drei Kolbentriebe 10 konzipiert ist, weist an ihren Enden Schwungmassen 44 bis 45 auf, von denen die eine, d. h. die hintere Schwungmasse 45, mit einer in der Zeichnung nicht mehr dargestellten Kupplung für den Anschluß der Kraftübersetzung 3 und die vordere Schwungmasse 44, Triebteile 46, wie z. B. Anlasser, Retarder 47 und/oder Lichtmaschine und/oder Stromerzeuger aufweisen kann. Bei der Darstellung dieser Schwungmasse 44 ist das Triebteil 46, z. B. der Retarder als auch der Anlasser, der nach erfolgtem Anlassen der Brennkraftmaschine 2 als Stromerzeuger wirken kann, schematisch veranschaulicht. In Fällen, in denen der Anlasser als sogenannter Schwungkraftanlasser wirken soll, ist dieser über eine besondere Kupplung 47 mit der Schwungmasse 44 dieses Endes der Kurbelwelle 40 verbindbar, wobei die Darstellung dieser Möglichkeit auch hier äußerst schematisch in Fig. 1 ausgeführt ist.

Der Kolbentrieb 10, bestehend aus einem Kolben und einem Pleuel 31, weist zwei den Kolben bildende Abschnitte 29, 30 auf, von denen der eine Abschnitt 29 der dichtende und der andere der führende Abschnitt 30 ist. Die Abschnitte 29,
30 sind über den Gelenkbolzen 48 am Pleuel 31 gelenkig verbunden, und es ist der dichtende Abschnitt mit einem, vorzugsweise konzentrisch zur Längsmittelachse X des Zylinders
6 bzw. 7 bzw. 8 liegenden Brennraum 49 versehen, in den
eine Verbrennungsluft 50 durch einen Einlaßkanal 51 mit
Drall eingebracht, und in den während einer vorgegebenen
Einspritzzeit eine Kraftstoffmenge in den drehenden Luftwirbel eingespritzt wird. Die Einspritzung der Kraftstoffmenge wird dabei so vorgenommen, daß durch Zünden derselben
ein Brennkern 52 unmittelbar um die Längsmittelachse X des
Brennraumes 49 entsteht und ein ebenfalls um diese Längsmittelachse rotierender Luftmantel 53 im Bereich der Wand
54 des Brennraumes 49 rotierend, verbleibt. Dem Auslaßkanal
55, von dem ein Teil im Zylinderkopf 11 vorgesehen ist,
ist eine Aufladergruppe 56 nachgeschaltet, welche vorzugsweise als eine an sich bekannte Abgasturbine ausgeführt
ist, die sich erfindungsgemäß von den vorbekannten aber
dadurch unterscheidet, daß der Auslaßstutzen 57 des heißen
Turbinenteils konzentrisch zur Längsmittelachse Z der Aufladergruppe in ein Spiralgehäuse 58 einmündet, und welches
Spiralgehäuse einen tangentialen Auslaß 59 für den Austritt
des Abgases 60 aufweist. Durch diese spiralförmige Führung
des Abgases 60 im Spiralgehäuse 58 wird ein strömungsgünstiger Austritt des Abgases erreicht und dadurch eine Leistungssteigerung der Aufladergruppe 56 erzielt, die sich
wiederum auf den Füllungsgrad der Brennkraftmaschine 2 mit
Frischluft 50 sehr vorteilhaft auswirkt. Bei Brennkraftmaschinen 2 mit drei Zylindern 6 bis 8 hat es sich ergeben,
daß es sehr von Vorteil ist, wenn die einzelnen Zylinder
über entsprechende Leitungen in eine solche Abgasturbine
61 eingeleitet werden, die dreiflutig ausgeführt ist. Dadurch werden die Strömungsverluste weitgehend reduziert,
so daß auch hier höhere Füllungsgrade an Frischluft 50 in
den jeweiligen Brennraum 49 eingebracht werden können. Es
hat sich dabei auch gezeigt, daß die dreiflutige Ausführung keine gegenseitige Störung des Abgasverlaufes mit sich
bringt, besonders dann nicht, wenn die Einmündungen der
Leitungen zwischen Abgasturbine 61 und jeweiligem Zylinder
6 bis 8 durch eine dort sich befindende, entsprechende Beschaufelung das Überspringen der Luftmassen von der einen
Einmündung zur anderen verhindern.

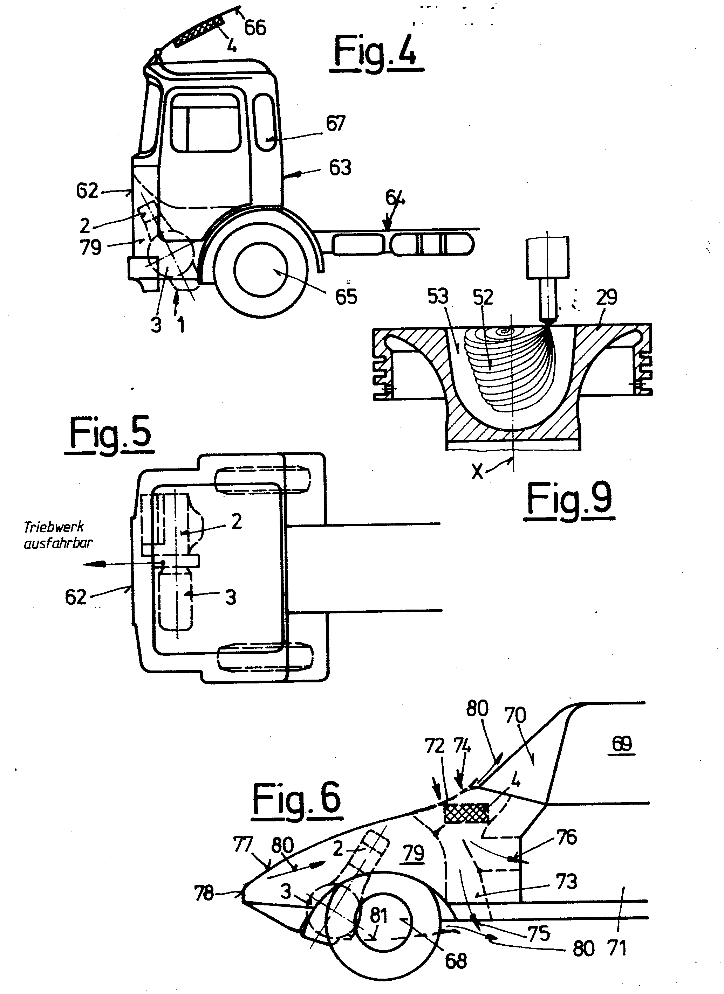

In den Fig. 4 bis 6 sind einige Ausführungsmöglichkeiten
eines Einbaues eines solchen erfindungsgemäßen Triebwerkes
1 dargestellt, wobei ersichtlich wird, daß durch die kurze
Bauform, insbesondere der Brennkraftmaschine 2,diese Einheiten sehr nahe an die Front 62 des Fahrzeuges 63 eingebaut
werden können. Brennkraftmaschine 2 und Kraftübersetzung
3 sind dabei von einem Auflagepunkt 64 der Hauptlast bzw.
des Aufbaues des LKW ziemlich weit entfernt und liegen bereits vor der Radachse 65, so daß insbesondere beim Anfahren
des Fahrzeuges 63 durch die zusätzliche Beladung der Radachse durch die Brennkraftmaschine 2 nebst Kraftübersetzung
3 diese Radachse, die zudem die Lenkachse ist, kaum von
der Fahrbahn abgehoben wird. Durch die Reduzierung des Kühlbedarfs der Brennkraftmaschine 2 braucht der Wärmetauscher
4 nicht mehr an der Front 62 des Fahrzeuges 63 untergebracht
zu sein, sondern kann an einem beliebigen Ort, wie beispielsweise an einem Dachspoiler 66 des Fahrzeuges, installiert
sein. Durch diese Anordnung des Triebwerkes 1 und hier insbesondere der Brennkraftmaschine 2 nebst Kraftübersetzung
3 lassen sich diese sehr leicht ein- und ausbauen, weil
an der Front 62 nicht erst der Wärmetauscher 4 oder andere
Peripherieaggregate abgebaut werden müssen , sondern nur
die Brennkraftmaschine und gegebenenfalls auch die Kraftübersetzung von vorn ausgebaut bzw. ausgefahren werden können.
Dies hat den Vorteil, daß auch das Fahrerhaus 67 nicht gekippt zu werden braucht, was bei heutigen LKW vielfach der
Fall ist, um zum Triebwerk 1 zu gelangen.

Analog der Anordnung der Brennkraftmaschine 2 nebst Kraftübersetzung 3 bei LKW kann diese auch bei PKW vorgenommen werden, wobei auch hier Brennkraftmaschine und Kraftübersetzung vor die Radachse 68 zu liegen kommen. Durch die
Reduzierung des Kühlbedarfes der Brennkraftmaschine 2 muß
kein zusätzlicher Wärmetauscher 4 für diese vorgesehen sein,
sondern es genügt, die Brennkraftmaschine an den Wärmetauscher für die Heizung der Fahrgastkabine 69 anzuschließen.
Dieser Wärmetauscher 4 bzw. Kabinenheizer ist im Bereich
der Windschutzscheibe 70 des Fahrzeuges 71 vorgesehen, und
es kann dieser Wärmetauscher Zu- und Abführungen 72, 73
aufweisen, die je nach Bedarf der Luftströmung 74 bis 76
umgelegt werden können. So kann beispielsweise entweder
eine Zuluft 74 durch ein Gitter der Zuführung 72 an der
Motorhaube 77 in den Wärmetauscher 4 und von diesem über
einen Kanal bzw. eine Abführung 73 ins Freie strömen, oder
es kann eine Zuluft 76 aufgewärmt in die Fahrgastkabine
69 eingeführt und/oder eine Umluft im Kreislauf durch den
Wärmetauscher geleitet werden, wie dies auch bei üblichen
Fahrzeugen 71 der Fall ist. Im Gegensatz zu vorbekannten
Lösungen wird aber bei der erfindungsgemäßen die Möglichkeit
erreicht,        die Anordnung der Brennkraftmaschine nebst
Kraftübersetzung an die Front 78 und hier vor die Radachse
68, vorzusehen und die Motorhaube 77 und somit die Front
des Fahrzeuges sehr aerodynamisch auszuführen. Auch kann
eine gegebenenfalls durch den Motorraum 79 zu führende Frischluft 80 so an den Wärmetauscher 4 vorbeigeführt werden,
daß diese sich an diesem erwärmt und anschließend entlang
der Windschutzscheibe  70 streicht, um dort infolge einer
starken Strömung Verunreinigungen an dieser Scheibe zu verhindern und/oder eine geringe Aufheizung derselben zu ermöglichen, durch letztere insbesondere bei sehr kalten Temperaturen die Sicht noch frei bleibt. Durch diesen Effekt
wird eine gezielte Strömung an die Windschutzscheibe 70
geleitet, die zum einen dort einen Unterdruck im Bereich
der Zuführung 72 erzeugt, wodurch die einströmende Luft
74 den Wärmetauscher 4 erreicht. Dieser Effekt wird zudem
dadurch verstärkt, daß ein im Bereich des Bodens 80 des des Fahrzeuges 71 vorgesehenes Leitblech 81 eine weitere
Luftmenge in diesen Bereich leitet, wo diese Luftmenge dort
einen Unterdruck erzeugt, der eine bessere Durchströmung
des Wärmetauschers 4 von der Motorhaube 77 zum Boden des
Fahrzeuges gestattet. Auch hier ist die Brennkraftmaschine
2 und gegebenenfalls auch deren Kraftübersetzung 3 an dem
einzigen Wärmetauscher 4, der gleichzeitig auch die Kabinenheizung übernimmt, angeschlossen. Durch den Einbau der Brennkraftmaschine 2 nebst Kraftübersetzung 3 noch vor die Radachse 68 wird auch hier ein günstigerer Gewichtsausgleich
geschaffen, so daß insbesondere bei Beladung des Fahrzeuges
71 dieses auch frontseitig auf die Fahrbahn gedrückt wird.

In den vorgenannten Ausführungen ist dargelegt, daß während
der Brennphase der Verbrennungsluft 50 mit dem Kraftstoff
zwischen dem Brennkern 52 und der Wand 54 des Brennraumes
49 noch ein rotierender, an dieser Verbrennung nicht teilnehmender Luftmantel 53, rotierend verbleibt. Dieser Luftmantel 53 wird solange aufrecht erhalten, bis die Verbrennung des Brennkerns 52 völlig abgeschlossen ist, so daß
die Wand 54 durch diesen rotierenden Luftmantel vor Einwirkung des Brennkerns weitgehend geschont bleibt. Dieser Luftmantel 53 wird während des Auspufftaktes der Brennkraftmaschine 2 zusammen mit den verbrannten Kraftstoff-/Luftbe-
standteilen durch Öffnen des Auslaßventils 82 in den Auslaßkanal 55 geblasen, und es wird zusätzlich zur Luft
dieses Luftmantels während des zweiten Teils des Auspuffhubes eine Frischluft 50 in den Zylinder 6 bzw. 7 bzw. 8
eingeblasen, die sowohl eine Reduzierung der noch unverbrannten Kraftstoffbestandteile bewirkt, als auch den Wänden,
d. h. Wandabschnit 21, der Zylinder und des Zylinderkopfes
11 weiter Wärme entzieht und diese dem Abgas 60 zuleitet.
Durch diese zusätzliche Aufheizung des Abgases 60 wird dessen Energie gesteigert, die sich wiederum in der Aufladergruppe 56 im Sinne der Steigerung der Abgasenergie sehr vorteilhaft auswirkt. Um dabei diese zusätzliche Luft 50
während des zweiten Teils des Auspufftaktes in den Brennraum 49 einzubringen, ist eine das Einlaßventil 83 steuernde
Nockenwelle 84 mit einem sogenannten Vornocken 85 versehen,
der vor Beginn des erneuten Arbeitstaktes, mit Füllung des
Brennraumes, Komprimierung desselben usw., das Einlaßventil
öffnet, um den Eintritt dieser zusätzlichen Luft zu ermöglichen. Die übliche Steuerung der Ventile 82, 83 kann nach
herkömmlichen, an sich bekannten Methoden erfolgen, wobei
auch hier es wichtig ist, daß die Ventile zu vorgegebenen
Zeiten sich öffnen bzw. wieder schließen.

Infolge der Reduzierung des Kühlbedarfs der Brennkraftmaschine 2 und somit des Triebwerkes 1, die im wesentlichen
durch die geringere Aufheizung der einzelnen Bauteile, insbesondere der der Brennkraftmaschine, erreicht wird, werden
diese ausschließlich mit einem Öl als Kühlmittel bedient,
welches aus dem Kurbelraum 12 bzw. der Ölwanne 13 zum einen
gegen den Kolbentrieb 10 gespritzt und zum anderen in der
Ringkammer 25 des Gehäuseblockes 5 geführt wird. Zusätzlich
zu diesen Temperierungen von Kolbentrieb 10 und Ringkammer
25 wird eine weitere Temperierung der Teile vorgenommen,
die der Brenngaswärme besonders stark ausgesetzt sind, so
etwa der Steg 86 zwischen den Ventilen 82, 83 und der Bereich der Einspritzdüse 87 selbst. Zu letzteren Bauteilen
sind im Zylinderkopf 11 Bohrungen geführt, durch die das
Kühlmittel im ständigen Kreislauf geführt bleibt. Dieses
Kühlmittel aus der Gesamtkühlung, insbesondere der Brennkraftmaschine, wird über in der Zeichnung nicht dargestellte
Leitungen dem Wärmetauscher 4 zugeführt, wo es abgekühlt
wird und dessen Energie entweder der Fahrgastkabine 67,
69 zugeführt oder ins Freie abgelassen wird. Zur Kühlung
des Wärmetauschers 4, insbesondere bei LKW-Fahrzeugen, können Elektrolüfter vorgesehen sein, die eine Frischluft an
den Wärmetauscher heranführen, so daß dieser nicht unbedingt
dem Fahrtwind ausgesetzt zu werden braucht. Die Leistung der Elektrolüfter ist sehr gering, so daß diese von der Lichtmaschine selbst oder der Fahrzeugbatterie gespeist werden können.

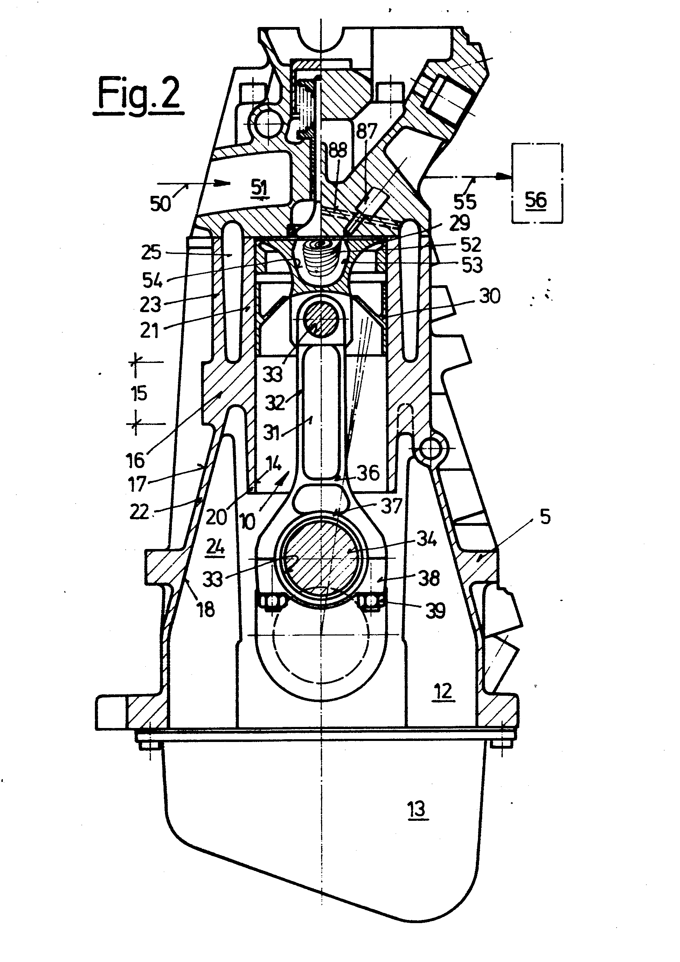

Das jeweils anzuwendende Brennverfahren der Brennkraftmaschine 2 kann vielschichtig sein, so etwa mit Einspritzung des Kraftstoffes schräg auf den im Brennraum 49 drehenden Luftwirbel, vgl. Fig. 2, oder senkrecht auf diesen und damit parallel zur Längsmittelachse X des Brennraumes, vgl. Fig. 9. In allen Fällen der Einspritzung ist es wichtig, daß der Kraftstoffstrahl und/oder die Kraftstoffstrahlen den an der Wand 54 des Brennraumes 49 rotierenden Luftmantel 53 nicht schneidet bzw. schneiden. Bei paralleler Einspritzung des Kraftstoffes zur Längsmittelachse X soll auch hier diese Einspritzung im Bereich des Schwerkreises, das ist ein Kreis um die Längsmittelachse mit dem 0,7-fachen des Zylinderdurchmessers, erfolgen.

Anmelder:

Ludwig   E l s b e t t
Günter   E l s b e t t
Industriestraße 14
D-8543 Hilpoltstein


Vertreter und Zustellungsbevollmächtigter:

Fritz   M e r t e n
Patent- und Zivilingenieur
Brückkanalstraße 25
D-8501 Schwarzenbruck

---

Aktenzeichen:
Unser Zeichen:     10.3138
Datum:             22. März 1982

---

## P A T E N T A N S P R Ü C H E

1. Triebwerk, bestehend aus Hubkolben-Brennkraftmaschine,
Kraftübersetzung (Getriebe) und Wärmetauscher, insbesondere für Kraftfahrzeuge hoher Leistung und Wirtschaftlichkeit, dadurch gekennzeichnet, daß die Brennkraftmaschine (2) nach einem, große Wärmedichtheit aufweisenden
Brennverfahren betreibbar, und daß zum Zwecke eines Kurzbaues dieser Brennkraftmaschine deren Zylinderanzahl
und Kühlbedarf reduziert und die spezifische Zylinderleistung des Triebwerkes (1) so gesteigert wird, daß die
Baulänge der Brennkraftmaschine einen Quereinbau derselben im Bereich der Front (62,78) des Kraftfahrzeuges
(63,71) zuläßt und der Wärmetauscher (4) aus der Front
und/oder dem Motorraum (79) des Kraftfahrzeuges entfernt
ist.

- 2 -

2. Triebwerk nach Anspruch 1, bei dem die Hubkolben-Brennkraftmaschine insbesondere als ein Dieselmotor ausgeführt
ist und diese einen Gehäuseblock mit darin vorgesehenen
Zylindern aufweist, von denen jeder Zylinder mit einem
darin axial verschieblichen Kolbentrieb ausgestattet
und jeder Kolbentrieb wiederum von einem Kolben und einem
mit diesem über einen Gelenkbolzen gelenkig verbundenen
Pleuel gebildet wird, und das jeweilige Pleuel mit dessen
dem Kolben abgewandten Ende am Kurbelzapfen einer im
Gehäuseblock drehbar gelagerten Kurbelwelle angelenkt
ist, sowie der Gehäuseblock selbst im Bereich der Kurbelwelle von einer Ölwanne und im Bereich seines der Kurbelwelle abgewandten Endes, in axialer Bewegungsrichtung
des Kolbentriebes, von einem, die jeweilige Öffnung des
Zylinders in diesem Bereich abschließenden Zylinderkopf
abdeckbar ist, und bei welcher Brennkraftmaschine jedem
Zylinder ein diesen mit Frischluft versorgendes und von
Abgasen entsorgendes Gasführungssystem zugeordnet ist,
wobei mindestens das Gasführungssystem eines Zylinders
an einer Aufladergruppe angeschlossen ist und die Verbrennung von Kraftstoff-Luftgemischen in je einem, dem
jeweiligen Zylinder zugeordneten Brennraum unter weitgehender Eindämmung eines Wärmeabflusses in ein Kühlmittel der Brennkraftmaschine erfolgt, <u>dadurch gekennzeich-
net</u>, daß durch die Eindämmung des Wärmeabflusses in das
Kühlmittel und somit Eindämmung der Kühlverluste die
Energie im Abgas (60) für die Aufladergruppe (61) so
stark angehoben wird, daß durch eine Erhöhung des Liefergrades an Frischluft (50) eine so hohe spezifische
Wirkleistung (Kw/1) in der Brennkraftmaschine (2) erzeugt
wird, die eine Reduzierung der Anzahl deren Zylinder
(6 - 8), bei gleicher Wirkleistung, auf höchstens 3-Zylinder ermöglicht, und die Brennkraftmaschine durch diese
Reduzierung der Anzahl deren Zylinder als Kurzmotor ausführbar und dieser, allein und/oder nebst dessen Kraftübersetzung (3) (z.B. Getriebe), quer zur Fahrtrichtung des Fahrzeuges (63,71) und/oder beliebig zu einer Triebachse ansetzbar ist, und daß der Wärmetauscher (4) insbesondere aus dem Umfeld der Brennkraftmaschine entfernt
ist.

3. Triebwerk nach Anspruch 1, wobei dessen Brennkraftmaschine mit, insbesondere mit einem, im jeweiligen Kolben
vorgesehenen Brennraum ausgestattet und in diesen Brennraum eine um die Längsmittelachse dieses Brennraumes
rotierende Verbrennungsluft eingebracht wird, in die
während einer vorgegebenen Einspritzzeit ein Kraftstoff
in deren drehenden Luftwirbel eingespritzt wird, dadurch
gekennzeichnet, daß zwischen dem vom Kraftstoffstrahl
gebildeten und um die Längsmittelachse (X) rotierenden
Brennkern (52) und einer den Brennraum (49) begrenzenden
Wand (54) ein Luftmantel (53) rotiert und dieser Luftmantel an der Verbrennung nicht teilnimmt, und daß zur Verminderung des Kühlbedarfs der Brennkraftmaschine (2)
und Erhöhung deren Kolben- und Abgasenergie dieser an
der Wand des Brennraumes rotierende Luftmantel noch über
die Verbrennungsphase des von der zentralen Brennzone
erfaßten Luftwirbels, an der Wand des Brennraumes rotierend, verbleibt.

4. Triebwerk nach Anspruch 1, dadurch gekennzeichnet, daß
der Abstand von Auflagepunkt (64) des Aufliegers und
des Triebwerkes (1) dadurch vergrößert wird, daß das
Triebwerk an die Front (62,78) eines Fahrerhauses (63,
71) verlagert ist.

5. Triebwerk nach Anspruch 1, dadurch gekennzeichnet, daß
dessen Brennkraftmaschine (2) an beiden Enden ihrer Kurbelwelle (40) je eine Schwungmasse (44,45) aufweist.

6. Triebwerk nach Anspruch 5, dadurch gekennzeichnet, daß
zum Erhöhen der Bremswirkung der Brennkraftmaschine (2)
eine der Schwungmassen (44) als Retarder (46) ausgebildet
ist.

7. Triebwerk nach Anspruch 5, dadurch gekennzeichnet, daß eine der Schwungmassen (44) mit elektrischen Baueinheiten (46) ausgestattet ist, und daß diese als Anlasser und/oder Stromerzeuger ausgeführt sind.

8. Triebwerk nach Anspruch 5, dadurch gekennzeichnet, daß mindestens ein Teil der Schwungmasse (44) oder die Schwungmasse selbst durch eine Kupplung (47) abschaltbar ist, und daß dieses Teil bzw. diese Schwungmasse als Schwungkraftanlasser ausgebildet ist.

9. Triebwerk nach den Ansprüchen 1 und 7, dadurch gekennzeichnet, daß für die Kühlung der Brennkraftmaschine (2) elektrische, auf Kühler (4) für das Kühlmittel und/oder die Ladeluftkühlung wirkende Ventilatoren vorgesehen und diese Ventilatoren am Stromerzeuger (46) angeschlossen sind.

10. Triebwerk nach Anspruch 9, dadurch gekennzeichnet, daß die Ventilatoren unabhängig voneinander schaltbar sind.

11. Triebwerk nach Anspruch 1, dadurch gekennzeichnet, daß als Kühlmittel für die Brennkraftmaschine (2) insbesondere ein Schmieröl vorgesehen ist.

12. Triebwerk nach Anspruch 2, wobei die Brennkraftmaschine in einem Motorraum, insbesondere eines Fahrzeuges, installiert ist, dadurch gekennzeichnet, daß der Wärmetauscher für die Brennkraftmaschine (2) außerhalb dieses Motorraumes (79) vorgesehen ist.

13. Triebwerk nach Anspruch 2, dadurch gekennzeichnet, daß zur Bewältigung hoher Gasdrücke zwischen Zylinderkopf (11) und Zylinder (6 - 8) der Brennkraftmaschine (2) im Bereich der Gasabdichtung der Zylinderkopf und Zylinder unmittelbar aufeinander, plan aufliegen.

14. Triebwerk nach Anspruch 2, dadurch gekennzeichnet, daß der Zylinderkopf (11) der Brennkraftmaschine (2), wie an sich bekannt, mittels Spannmitteln (27) am Gehäuseblock (5) gehalten ist, und daß diese Spannmittel im Bereich des unteren Totpunktes des Kolbentriebes (10) im Gehäuseblock verankerbar sind, und daß die die Lagerdeckel (42) der Kurbelwelle (40) haltenden Schrauben (43) achsgleich zu den Spannmitteln des Zylinderkopfes im Gehäuseblock verankerbar sind.

15. Triebwerk nach Anspruch 14, dadurch gekennzeichnet, daß zwischen den die Lagerbügel (42) haltenden Schrauben (43) die Wand des Gehäuseblockes (5) Ausnehmungen (19) aufweist bzw. dort durchbrochen ist.

16. Triebwerk nach Anspruch 13, dadurch gekennzeichnet, daß zum Zwecke einer besseren Einleitung der Gaskräfte aus dem Zylinderkopf (11) in den Gehäuseblock (5) und/oder Verteilung der Gaskräfte im Zylinderkopf dieser weder mit Kühlrippen noch mit Kühlmittelkernen (Wasserkernen) ausgestattet ist.

17. Triebwerk nach Anspruch 14, dadurch gekennzeichnet, daß im Bereich des unteren Totpunktes des Kolbentriebes (10) der Brennkraftmaschine (2) der Gehäuseblock (5) eine die Zylinder (6 - 8) mindestens teilweise umgreifende Bundplatte (16) aufweist, und daß an dieser Bundplatte, die unlösbar mit dem Gehäuseblock verbunden ist, die Verankerungen für die Spannmittel (27) des Zylinderkopfes (11) und die Krafteinleitung der Lagerbügel (42) in den Gehäuseblock vorgesehen sind.

18. Triebwerk nach Anspruch 17, dadurch gekennzeichnet, daß die Bundplatte (16) als eine dem Ausgleich der Kräfte aus den Gas- und Triebkräften dienende Zone ausgebildet ist.

~~Anspruch~~/Ansprüche Nr. 20,21, 22,23
~~gilt~~/gelten als aufgegeben

19. Triebwerk nach Anspruch 17, dadurch gekennzeichnet, daß die Bundplatte (16) gürtelförmig um jeden Zylinder (6 - 8) angeordnet ist.

20. Triebwerk nach Anspruch 17, dadurch gekennzeichnet, daß der Gehäuseblock (5) zwischen der Bundplatte (16) und dessen zum Zylinderkopf (11) auskragenden Ende (Wandabschnitt 21) eine von der Zylinderwand (14) und dem Außenmantel (17) des Gehäuseblockes (5) gebildete, zum Zylinderkopf hin offene Ringkammer (25) aufweist, und daß diese Ringkammer an einer Kühlmittelversorgung der Brennkraftmaschine (2) angeschlossen ist.

21. Triebwerk nach Anspruch 14, dadurch gekennzeichnet, daß der Zylinder (6 - 8) und hier dessen Wandabschnitte (21) zwischen der Bundplatte (16) und dem Zylinderkopf (11) so elastisch und der Schraubenzug der Spannmittel (27) so hoch bemessen ist, daß eine etwaige unterschiedliche Ausdehnung der frei auskragenden Zylinder und/oder der die Ringkammer begrenzenden Zylinderwand (21) und des Außenmantels (23) des Gehäuseblockes (5) ausgleichbar ist.

22. Triebwerk nach den Ansprüchen 20 und 21, dadurch gekennzeichnet, daß das Volumen der Ringkammer (25) für die Aufnahme eines Kühlmediums der Kühlmittelversorgung der Dehnfähigkeit der die Ringkammer begrenzenden Zylinderwand (21) und/oder Außenwand (23) des Gehäuseblockes (5) nach Kühlmittelmenge und/oder Kühlmitteltemperatur angepaßt ist.

23. Triebwerk nach Anspruch 1, dadurch gekennzeichnet, daß die Gas- und Reibwärme aus dem Zylinder (6 - 8) in einen Ölkreislauf der Brennkraftmaschine (2) einleitbar ist.

24. Triebwerk nach Anspruch 1, dadurch gekennzeichnet, daß zum Erhöhen der Reibwärme eine zusätzliche Bremse, insbesondere am freien Ende der Kurbelwelle (40), vorgesehen ist.

25. Triebwerk nach Anspruch 24, dadurch gekennzeichnet, daß die zusätzliche Bremse ein hydraulischer Wandler ist.

26. Triebwerk nach Anspruch 24, dadurch gekennzeichnet, daß die zusätzliche Bremse ein elektrischer Wandler ist.

27. Triebwerk nach Anspruch 7, dadurch gekennzeichnet, daß am freien Ende der Kurbelwelle (4) ein Anlasser (46) angeflanscht und dessen Abtrieb, insbesondere während seines schnellen Umlaufes, mit dem diesem Anlasser zugewandten Antrieb der Kurbelwelle kuppelbar ist.

28. Triebwerk nach Anspruch 14, dadurch gekennzeichnet, daß zur Verbesserung der Kraftübertragung auf die Schrauben (43) des Lagerdeckels (42) die Kurbelwelle (40) direkt, ohne Zwischenschaltung einer Lagerschale, im Deckel gelagert ist.

29. Triebwerk nach Anspruch 3, dadurch gekennzeichnet, daß zur Steigerung der Leistung der Zylinder (6 - 8) und Verminderung des Kühlbedarfes der Brennkraftmaschine (2) das Einlaßventil (83) im zweiten Teil des Auslaßhubes geöffnet und Frischluft (50) durch den jeweiligen Zylinder in den Auslaßkanal (55) gespült wird.

30. Triebwerk nach Anspruch 2, dadurch gekennzeichnet, daß zur Steigerung des Luftdurchsatzes bei der drei Zylinder (6 - 8) aufweisenden Brennkraftmaschine (2) für jeden Zylinder eine besondere Leitung zu einer dreiflutigen Abgasturbine (61) geführt ist.

Ansprüche Nr: 31, 32, 33, 34, 35, 36
gilt/gelten als aufgegeben

31. Triebwerk nach Anspruch 30, dadurch gekennzeichnet, daß
der Gasaustritt aus der Turbine (61) einem dem radialen
Gasaustritt dienenden Gehäuse (58) nachgeschaltet ist.

32. Triebwerk nach Anspruch 30, dadurch gekennzeichnet, daß
dem Gasaustritt ein Spiralgehäuse (58) nachgeschaltet
ist, und daß der Eintritt des Abgases (60) in dieses
Spiralgehäuse konzentrisch zur Längsmittelachse (z) des
Spiralgehäuses erfolgt, dessen Austritt dagegen tangential
an diesem Spiralgehäuse angebracht ist.

33. Triebwerk nach Anspruch 5, dadurch gekennzeichnet, daß
beide Schwungmassen (44,45) dem Massenmomentausgleich
der Brennkraftmaschine (2) dienen.

34. Triebwerk nach Anspruch 1, dadurch gekennzeichnet, daß
zur Erhöhung des Kühlluftdurchsatzes die Brennkraftmaschine (2) und die Motorhaube (77) so stark geneigt sind,
daß hinter dem Motorraum (79) eine ausreichend große
Druckdifferenz für die Motorraumströmung entsteht, und
daß die verringerte Kühlerwärme allein durch die Wirkung
des Fahrtwindes hinter dem Motorraum abgeführt wird.

35. Triebwerk nach Anspruch 3, dadurch gekennzeichnet, daß
der Kraftstoff im Bereich des Schwerkreises der im Brennraum (49) drehenden Verbrennungsluft (50) eingespritzt,
und daß der Strahl des Kraftstoffes parallel bis annähernd
parallel zur Längsmittelachse (X) des Brennraumes verläuft.

36. Triebwerk nach Anspruch 3 oder 35, dadurch gekennzeichnet, daß der Strahl des Kraftstoffes den an der Wand
(29) des Brennraumes (49) rotierenden Luftmantel (53)
nicht schneidet.

Anspruch/Ansprüche Nr. -5-
gilt/gelten als aufgegeben 37

37. Triebwerk nach mindestens einem der Ansprüche 1 bis 36, dadurch gekennzeichnet, daß insbesondere bei dessen Einbau in LKW-Fahrzeuge (63) mindestens dessen Brennkraftmaschine (2) durch eine Öffnung an der Front (62) ein- und austauschbar ist.

Fig.1

# Fig.2

Fig.3

**Fig.4**

66
4
67
63
62
2
79
3 1
64
65

53 52 29
X

**Fig.9**

**Fig.5**

*Triebwerk ausfahrbar*

2
62
3

**Fig.6**

80 70
72 74
4
69
76
77 80
2
79
73
78
3
81
68
75
80 71

## Fig.7

## Fig.8